# EUROPEAN PATENT APPLICATION

(11) **EP 3 680 736 A1**
(43) Date of publication of application: **15.07.2020**
(21) Application number: 19151601.2
(22) Date of filing: 14.01.2019
(51) Int. Cl.: G05B 19/042, B23Q 3/155, G05B 19/4093

(54) **APPARATUS AND METHOD FOR TESTING ELECTRONIC DEVICE**

(71) Applicant: JOT Automation Oy, 90590 Oulu (FI)
(72) Inventor: Lämsä, Juha, 90590 Oulu (FI)
(74) Representative: Kolster Oy Ab

(57) **Abstract**

An apparatus (100) for testing an electronic device (102) comprising a testing member (104) configured to perform testing of the electronic device (102), a guiding member (106) configured to guide a movement of the testing member (104) and determine a working area of the testing member (A1), a tool magazine (108) configured to store replaceable testing tools of the testing member (110) used for testing the electronic device (102) and an actuator (112) configured to set the tool magazine (108) to a non-functional position (P1) and to a functional position (P2). Wherein the tool magazine (108) within the non-functional position (P1) is configured to be out of the working area of the testing member (A1) and at least partly to overlap with the guiding member (106) in a direction (Z) which is a parallel to a normal of a plane of the working area of the testing member (A1).

## Description

### Field

The invention relates to an apparatus and a method for testing an electronic device.

### Background

Electronic devices, such as mobile phones, tablet computers, laptops and the like, may be beneficial to be tested in order to validate/verify their needed functionality. A plurality of the functionalities of the electronic device may be tested like, for example, mechanical, audio and optical functions of the electronic device. The different kind of testing tools may be needed for performing the testing of the electronic devices. The testing may be performed in one test unit which may comprise, for example, a robot for performing the actual testing. The same robot may perform all needed tests and hence the robot must have a plurality of the replaceable testing tools in order to be able to test the all needed functionalities of the electronic device. When the electronic device is placed into the testing unit, the all needed different tests are often performed successively and hence, the robot must change the testing tool during the testing of the electronic device. Therefore, the all testing tools must be placed near by the robot in the testing unit such that the change of the testing tool is possible to do during the testing.

Current solutions for storing the testing tools in the testing unit may not be effective. The current solutions require a lot of space which affect the size of the testing unit and make also a structure of the testing unit complex.

Hence, there is a need for a sophisticated solution to store the testing tools in the testing unit.

### Brief description

The invention is defined by the independent claims. Embodiments are defined in the dependent claims.

### List of drawings

Example embodiments of the present invention are described below, by way of example only, with reference to the accompanying drawings, in which
Figure 1A, 1B, 1C, 1D and 1E illustrate the apparatus according to some embodiments;
Figure 2A and 2B illustrate the apparatus according to some embodiments;
Figure 3A and 3B illustrate the apparatus according to some embodiments; and
Figure 4 illustrates a flow chart of a method according to an embodiment.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

In order to ensure high quality and to reduce failures of manufactured electronic devices, e.g. mobile phones, tablets, portable computers and/or their elements or electric circuits, various testing processes are carried out in a production line. The testing processes are highly automated nowadays. The testing of the electronic devices is performed in a testing unit, which may perform one or more different tests for the electronic device automatically. It is usual that a plurality of the different testing tools are needed in the testing process performed in the testing unit. Therefore, a plurality of the testing tools must be stored in the testing unit to ensure that the all needed tests can be carried out for the electronic device. Storing of the testing tools in the testing unit requires space because the testing tools should be stored nearby an apparatus which is using the testing tools and performs the actual testing of the electronic device in the testing unit. A placement of the testing tools in the testing unit is an essential point to keep a structure of the testing unit as compact and simple as possible.

The present invention provides a sophisticated solution for the testing unit in which a plurality of the testing tools are stored for testing of the electronic device.

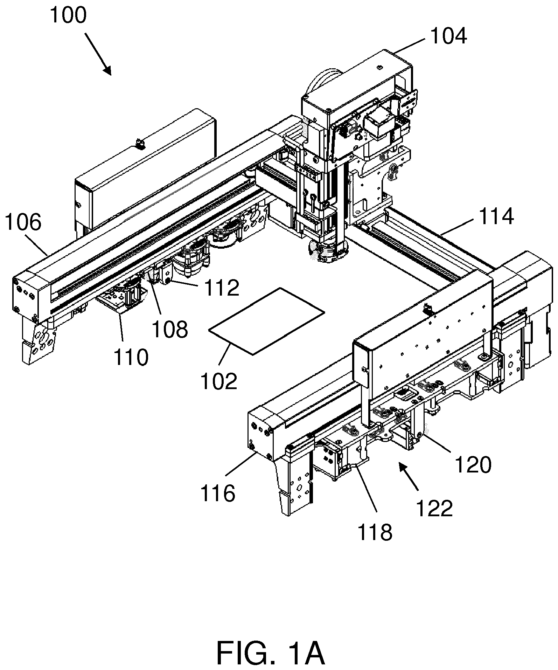

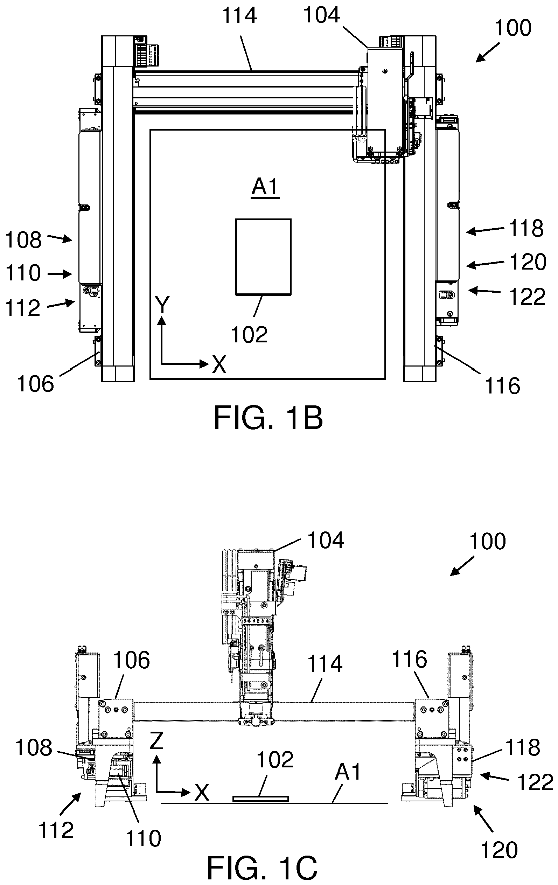

Figure 1A illustrates an embodiment of an apparatus 100 according to the invention. The apparatus 100 may be used for testing of an electronic device 102. The apparatus 100 for testing the electronic device 102 comprising, a testing member 104 configured to perform testing of the electronic device 102, a guiding member 106 configured to guide a movement of the testing member 104 and determine a working area of the testing member A1 (illustrated in Figure 1B), a tool magazine 108 configured to store replaceable tools of the testing member 110 used for testing the electronic device 102 and an actuator 112 configured to set the tool magazine 108 to a non-functional position P1 and to a functional position P2, wherein the tool magazine 108 within the non-functional position P1 is configured to be out of the working area of the testing member A1 and at least partly to overlap with the guiding member 106 in a direction Z which is a parallel to a normal of a plane of the working area of the testing member A1.

The testing member 104 is a device which performs the actual testing of the electronic device 102 with the testing tools 110. The device may be, for example, a testing robot having, for example, 3-axis for working. An amount of the axes of the testing robot may vary according to the needs. The testing robot may be configured to perform, for example, functional or performance tests. The testing robot may test an audio, a camera or a connectivity of the electronic device, for example. The testing robot may also perform many kind of mechanical tests for the electronic device. The testing member may also perform other functions than the testing activities. In some embodiment, the testing member may be configured, for example, to connect or disconnect connectors. It may also be configured to control the electronic device in the testing or to set up a test setup of the electronic device.

The guiding member 106 is used to guide the movement of the testing member 104. The guiding member 106 is a component which enables the movement of the testing member 104 in some certain direction. The guiding member 106 may be, for example, a guide rail or any other component which is suitable for enabling and guiding the movement of the testing member 104 like, for example, the testing robot. The guiding member may allow the testing member 104 to move only in one direction, for example, in a Y-direction. In some embodiment, two separate guiding members 106 may be used to guide the movement of the testing member 104. A first guiding member may be placed on a first side and a second guiding member may be placed on a second side of the testing member 104. Anyway, the two separate guiding members enable the movement of the testing member 104 only in the one direction nevertheless, there are two of them.

In an embodiment, illustrated in Figure 1B, the apparatus 100 comprises two or more guiding members 106 configured to enable the movement of the testing member in a multiple directions. There may be, for example, two guiding members, wherein the first guiding member 106 is configured to enable the movement of the testing member 104 in the Y-direction and the second guiding member 114 is configured to enable the movement of the testing member in X-direction, for example. The X-direction and the Y-direction may be perpendicular to each other, as illustrated in Figure 1B. The two guiding members 106, 114 enables the movement of the testing member in the two directions and determine the working area of the testing member A1. The working area of the testing member A1 is an area in which the testing member 104 is configured to operate when performing the testing of the electronic device. In other words, the working area A1 may set the limits for the operation of the testing member 104 in the X- and Y-direction defined in Figure 1B and the testing member may operate only within the working area. In addition, the testing member 104 may be configured to move in a Z-direction which is a perpendicular to a plane of the working area of the testing member A1 determined by the X- and Y-axes. The testing member itself may comprise a component which enables the movement in the Z-direction and hence, a separate guiding member is not needed. In some embodiment, the separate guiding member may be used to enable and guide the movement of the testing member in the Z-direction.

The apparatus 100 comprises the testing tool magazine 108 configured to store the testing tools 110 in the apparatus 100. The testing member 104 utilizes different kind of the replaceable testing tools 110 when performing different kind of the tests for the electronic device 102. The one testing tool may be used to perform some certain test for the electronic device and because the apparatus may be configured to perform a plurality of tests for the electronic device, a plurality of testing tools may be needed. It is also possible that two or more tools are needed to perform some certain one test for the electronic device. The testing tool is configured to be detachably connected with the testing member which enables the testing member to change the testing tool. The tool magazine is configured to store the testing tools when the testing tool is not connected to the testing member and/or not used for testing of the electronic device. The testing tools are set to the tool magazine so that the testing device is able to fetch as well as return the testing tool from/to the tool magazine.

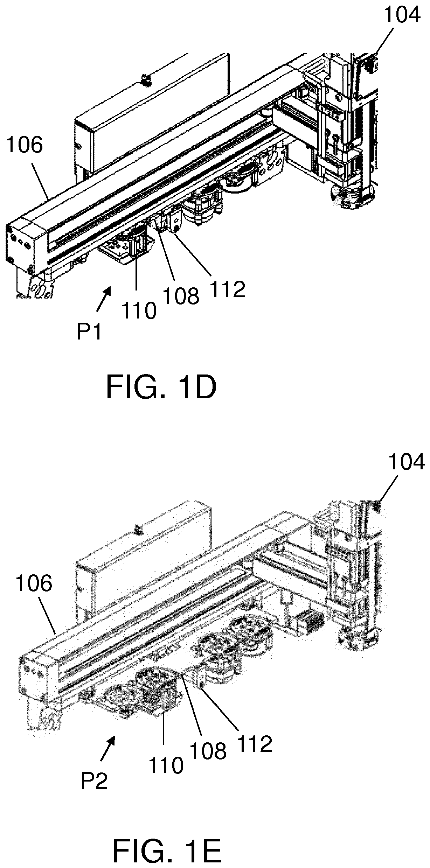

The apparatus 100 comprises the actuator 112 configured to set the tool magazine 108 between the different positions. The actuator may be, for example, a pneumatic or hydraulic cylinder configured to change the position of the tool magazine 108. It may also be any other component which is able to perform the same action like the pneumatic cylinder, for example. The actuator may be configured to set the tool magazine 108 to the non-functional position P1 and/or the functional position P2. The non-functional position P1 is illustrated in Figure 1D and the functional position of the tool magazine is illustrated in Figure 1E. In the non-functional position P1 the tool magazine is substantially out of the working area of the testing member A1. Hence, the testing member may not then be able to take or return the testing tool from/to the tool magazine. The tool magazine may be positioned to the non-functional position, for example, when the testing member is performing the testing of the electronic device. In other words, the tool magazine may be in the functional position only when the testing member is fetching or returning the testing tool. So most of the time the tool magazine may be in the non-functional position in the apparatus. Still, the tool magazine should be placed nearby the testing member that it would be quickly and easily available when the testing tool is going to be changed. The actuator may further comprise one or more guiding components to guide setting of the tool magazine to the non-functional and/or the functional position. The guiding element(s) of the tool magazine may also be a separate component(s) which is not integrated with the actuator.

The tool magazine 108 overlaps with the guiding member 106 in the apparatus 100. The tool magazine 108 and the guiding member 106 overlap each other in a direction Z which is parallel to the normal of the plane of the working area of the testing member A1. As described earlier, the X- and Y-axes determine the working area of the testing member A1 in the two directions. The direction Z is then perpendicular to the plane formed by the X- and Y-axes. The direction Z forms then the Z-axis in the apparatus 100. The Z-axis is illustrated in Figure 1C, which is a front view of the apparatus 100. Hence the Z-axis is a vertical axis when looking at the apparatus from the front view as described in Figure 1C. When the tool magazine 108 and guiding member 106 are overlapped in the direction Z, the tool magazine may not need much space in the apparatus. Hence the apparatus may be arranged into a smaller space compared to a conventional solutions wherein some extra space may be reserved for the tool magazine.

The described apparatus 100 provides the sophisticated and effective solution to store a plurality of the testing tools 110 nearby the testing member. The apparatus 100 may be place in a small space because there is no need to reserve an extra space for the tooling magazine 108 in the apparatus 100. This is very important especially when the apparatus 100 comprises a plurality of the testing tools 110 to perform a plurality of tests for the electronic device 102. From the spatial point of view the apparatus 100 is sophisticated compared to the conventional solution.

In an embodiment, a structure of the tool magazine 108 is elongated. This is illustrated, for example, in Figure 1E, wherein the tool magazine is illustrated in the functional position P2. A shape of the tool magazine may be, for example, substantially rectangle or cylinder. In other words, a one dimension of the tool magazine is substantially greater that the other dimensions of the tool magazine.

In an embodiment, the tool magazine 108 is configured to overlap with the guiding member 106 in the non-functional position P1 such that the tool magazine 108 is either side of the guiding member 106. As described earlier, the tool magazine overlaps with the guiding member in the direction Z. Hence, the tool magazine may then overlap the guiding member under or above the guiding member when looking at the apparatus from the front view as illustrated in figure 1C. Referring to Figure 1C, the tool magazine 108 is in the non-functional position and is located substantially under the guiding member 106. Hence, the all testing tools 110 stored in the tool magazine 108 are also substantially under the guiding member 106. The tool magazine is out of the working area of the testing member and hence, does not affect the function of the testing member but is still very close to the working area. Hence, the tools stored in the tool magazine are easily available when needed. The tool magazine 108 may also overlap with the guiding member 106 such that the tool magazine is substantially above the guiding member 106. This embodiment is not illustrated in the figures. A principle and function of the embodiment wherein the tool magazine with the testing tools is above the guiding member may be substantially same like with the embodiment wherein the tool magazine is placed under the guiding member.

In an embodiment, a longitudinal axis of the tool magazine 108 and the guiding member 106, which is a parallel to a normal of the direction Z, are parallel when the tool magazine 108 is within the non-functional position P1. In other words, a shape of the tool magazine and the guiding member may be elongated, and the tool magazine and the guiding member may be parallel in the longitudinal direction when the tool magazine is in the non-functional position. The longitudinal direction may be parallel with the direction Y as illustrated in Figure 1B. In other words, the longitudinal axis is an axis which goes along the lengthwise direction of the guiding member 106 and/or the tool magazine 108. In some other embodiment, the tool magazine and the guiding member may also be parallel when the tool magazine is in the functional position.

As illustrated, for example, in Figure 1B the tool magazine and the guiding member may be positioned such that they are parallel in the longitudinal direction when the tool magazine is in the non-functional position. Hence, the tool magazine may be overlapped with the guiding member from its whole length. In other words, the tool magazine may be substantially under or above the guiding member from its whole length. This positioning of the tool magazine may enable the smaller width of the apparatus. This is very important feature because the testing apparatus if often located in the automated production line of the electronic device where may be a lack of space. The smaller the outer diameters of the testing apparatus is the more compact is the structure of the testing apparatus. The tool magazine and/or the tools are often positioned in the conventional solutions outside of the working area and also quite a far away from the working area. Because of this, some extra space must be arranged to the tool magazine and/or tools in the testing device and this may increase external dimensions of the testing device. In the described embodiment, this kind of challenges may be avoided because of the effective positioning of the tool magazine.

In an embodiment, the tool magazine 108 in the functional position P2 is configured to be positioned within the working area of the testing member A1. When the actuator is set the tool magazine from the non-functional position P1 to the functional position P2, the tool magazine is positioned within the working area of the testing member A1. When the tool magazine is in the working area of the testing member, the testing member has an access to the replaceable tools stored in the tool magazine. In other word, the testing member may be able to change the replaceable tool used for testing the electronic device when the tool magazine is in the functional position P2.

In an embodiment, the tool magazine 108 is configured to provide the replaceable testing tools 110 for the testing member 104 when the tool magazine 108 is within the functional position P2. As described earlier, the tool magazine may be positioned within the working area of the testing member when the tool magazine is in the functional position P2 and then the testing member may have the access to the tools stored in the tool magazine. Hence, the tool magazine may be able to set the replaceable tools such that the replaceable tools are available for the testing member. In other words, the testing member may be able to take the replaceable tool from the tool magazine when the tool magazine is in the functional position. For example, the apparatus 100 starts to test the electronic device and the testing member needs some certain tool which is stored in the tool magazine. Then the tool magazine is set from the non-functional position to functional position wherein the the replaceable tools are available for the testing member. Hence, the testing member may be moved nearby the tool magazine such that the testing member may take the needed tool from the tool magazine. When the testing member has taken the replaceable testing tool from the tool magazine, the tool magazine is set to the non-functional position wherein it is positioned away from the working area of the testing member and the testing member can start to test the electronic device.

In an embodiment, the tool magazine 108 is configured to receive the replaceable testing tool 110 from the testing member 104 when the tool magazine 108 is within the functional position P2. Hence, the tool magazine may also be able to receive the replaceable testing tool from the testing member when the tool magazine is in the functional position P2. As described in the previous example, the testing member may take the testing tool from the tool magazine when the tool magazine is in the functional position. In addition, the testing member may return the testing tool into the tool magazine when the testing has been performed in which the testing tool was needed. When the testing member has returned the one testing tool it may also take the other tool from the tool magazine which may be needed to perform some other test for the electronic device. In other words, when the tool magazine is in the functional position P2, the testing member 104 may be able to take, return or exchange the replaceable testing tool 110 from the tool magazine 108.

When the tool magazine in the functional position is positioned with in the working area of the testing member, the testing member may not need to move out of the working area. Therefore, there is no need to configure the testing member to move away from its working area, for example, when the replaceable testing tool need to be changed. This may make the structure of the testing member as well as the whole testing apparatus simpler and compact.

In an embodiment, the tool magazine 108 is configured to store the replaceable tools 110 side by side in a longitudinal direction of the tool magazine 108. As described earlier, the shape of the tool magazine may be substantially elongated, for example, rectangular, wherein the one dimension is substantially greater than others. The replaceable testing tools may be arranged side by side in the longitudinal direction of the tool magazine, in other words, in the direction of the longest dimension of the tool magazine. Hence, the tools form a row in the tool magazine. This is illustrated, for example, in Figure 1E wherein the tool magazine is in the functional position P2 and the replaceable tools are available for the testing member. The replaceable testing tools are arranged adjacent to each other such that there is space enough between the tools to enable the testing member to fetch or return the tool from the tool magazine. Arranging the replaceable tools side by side in the longitudinal direction of the tool magazine make possible to store more tools in the tool magazine such that the tools are available for the testing member. In some embodiment, the replaceable tools may be arranged such that there are two or more rows of the tools adjacent to each other in the tool magazine. The several rows may be arranged side by side in the direction X, for example. As illustrated in the Figure 1E, four replaceable testing tools are arranged side by side in the tool magazine and hence the tools form a first row of the tools. Other four tools, for example, may be arranged adjacent to the first tool row in the direction X forming a second row of the tools. Both tool rows may be arranged so that the tools in the row are adjacent to each other in the longitudinal direction of the tool magazines. Amount of the replaceable testing tools in the tool magazine may vary and also the arrangement of the tools in the tool magazine may vary as well. A shape and size of the tools may affect how the tools are arranged in the tool magazine.

In an embodiment, the actuator 112 is positioned substantially in the middle of the tool magazine 108 in the longitudinal direction of the tool magazine 108. As illustrated in Figure 1E, wherein the tool magazine is in the functional position P2, the actuator is substantially in the middle of the tool magazine in longitudinal direction. When the actuator is positioned in the middle of the tool magazine in the apparatus, the tool magazine may be opened smoothly. The tool magazine may be stuck when setting it to the non-functional or functional position if the actuator is not substantially in the middle of the tool magazine. In some embodiment, the apparatus may comprise, for example, two actuators for setting the one tool magazine to the functional or non-functional position. Then the actuators may be positioned substantially on the both sides of the tool magazine such that one is in a first end and other is in a second end of the tool magazine, wherein the ends are opposite to each other, for example, in the longitudinal direction.

In an embodiment, the apparatus 100 further comprises a first guiding member 106, a second guiding member 114 and a third guiding member 116 configured to guide the movement of the testing member 104 and determine the working area of the testing member A1. The apparatus 100 further comprises a first tool magazine 108 and a second tool magazine 118 configured to store the replaceable tools of the testing member 110 used for testing the electronic device 102, and a first actuator 112 and a second actuator 120, wherein the first actuator 112 is configured to set the first tool magazine 108 to the non-functional position P1 and to the functional position P2 and the second actuator 120 is configured to set the second tool magazine 118 to the non-functional position P1 and to the functional position P2. The first and the second tool magazine 108, 118 within the non-functional position P1 are configured to be out of the working area of the testing member A1, and wherein the first tool magazine 108 is configured at least partly to overlap with the first guiding member 106 and the second tool magazine 118 is configured at least partly to overlap with the third guiding member 116 in a direction Z which is parallel to the normal of the plane of the working area of the testing member A1.

Referring to Figure 1A, the first and the third guiding member 106, 116 may be configured to guide and enable the movement of the testing member in the direction Y and the second guiding member 114 may be configured to guide and enable the movement of the testing member in the direction X. The X and Y direction are illustrated in Figure 1B. Hence, the first, the second and the third guiding member form a working area of the testing member in the X and Y directions. In addition to the X and Y directions, the testing member may be able to move in the Z direction as described earlier.

Figure 1A illustrates also the first and the second tool magazines 108, 118 used for storing the replaceable testing tools of the testing member 110. The first and the second actuators are also illustrated in Figure 1A, wherein the first actuator may be configured to set the first tool magazine to the functional and/or the non-functional position and the second actuator may be configured to set the second tool magazine to the non-functional and/or the functional position. As illustrated in Figure 1A, the first tool magazine 108 and the first guiding member 106 may be configured to overlap each other and also the second tool magazine 118 and the third guiding member 116 may be configured to overlap each other when the tool magazine 108, 118 is in the non-functional position P1. As described earlier the overlapping in both cases may be in the direction Z, which is parallel to the normal of the plane of the working area of the testing member A1 determined by the X and Y axes.

In an embodiment, the first tool magazine 108 is configured to overlap with the first guiding member 106 such that the first tool magazine 108 is on a first side of the first guiding member 106, and wherein the second tool magazine 118 is configured to overlap with the first guiding member 106 such that the second tool magazine 118 is on a second side of the first guiding member 106 in the non-functional position P1, wherein the first and second sides of the guiding member 106 are opposite. As described earlier, the tool magazine may overlap with the guiding member such that the tool magazine is positioned either side of the guiding member in the direction Z. In other words, such that the tool magazine is substantially under or above the guiding member. In the embodiment, the first magazine may be positioned to overlap with the first guiding member such that the first tool magazine is substantially under the first guiding member and the second tool magazine may be positioned to overlap with the first guiding member such that the second tool magazine is substantially above the guiding member. Hence, there may be the two tool magazines positioned substantially under and above the first guiding member. The two tool magazines may be positioned also on the both side of the any other guiding member in the direction Z according to the previous description. In some embodiment, the apparatus may further comprise a plurality of the tool magazines, wherein the tool magazines may be positioned, for example, under and above the first and the second guiding members. Hence there may be totally four tool magazines in the apparatus. These embodiments are not illustrated in the figures.

In an embodiment, the second tool magazine 118 is configured to store replaceable components of the testing tools 122 used for testing the electronic device 102. The replaceable components of the testing tools 122 may be detachably connected with the testing tools 110. One testing tool 110 may utilize a plurality of the testing components 122 in the testing of the electronic device. Hence, with the one replaceable testing tool 110 may be possible to perform a plurality of the test by changing the testing component of the testing tool 122. The replaceable testing tools may be stored in the first tool magazine and the replaceable components of the replaceable testing tools may be stored in the second tool magazine. The testing member may then first fetch the testing tool and then fetch the suitable testing component for the selected testing tool.

In an embodiment, the tool magazine 108, 118 comprises a locking member configured to prevent a movement of the replaceable testing tools 110 or the replaceable testing components 122 in relation to the tool magazine 108, 118 when setting the tool magazine to the non-functional position P1 and/or functional position P2. The locking member may block the movement of the testing tools and/or components in relation to the tool magazine when the tool magazine is moving to the non-functional or functional positions. In other words, the locking member holds the testing tools and components in their locations in the tool magazine such that the movement of the tool magazine does not substantially change the location of the testing tools or components. This is important because the testing member may exactly know the location of components in the tool magazine and if the location of the testing tool or component is changed in the tool magazine, the testing member is not necessary be able to fetch the component from the tool magazine. The testing tools or components may also fall away from the tool magazine if there is no locking member to hold the testing tools and components in their locations. The locking member may not prevent the testing member to fetch or return the testing tool or component from/ to tool magazine.

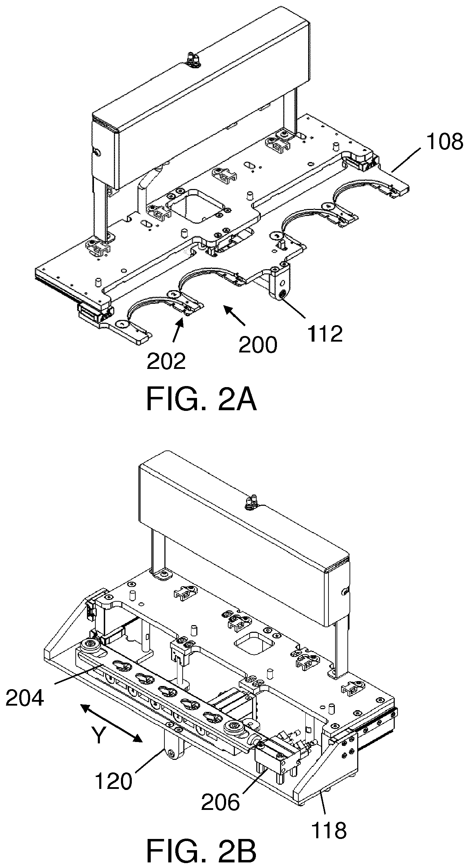

In an embodiment, illustrated in Figure 2A, the locking member may be a mechanical feature in the tool magazine and/or the testing tool and /or the testing components. For example, a place 200 in the tool magazine 108, 118 wherein the testing tool or component is placed may comprise a slot 202 configured to receive a counter feature of the testing tool or component and hence, hold the testing tool or component in its place 200. The counter feature in the testing tool or component may be, for example, protrusion which fits into the slot 202. This may prevent the movement of the testing tool or component, for example, to any other direction that upwards, which may be, for example, Z direction from the plane of the working area A1 towards the testing member 104. Hence, the testing member may be able to fetch or return the testing tool or component from/into the place. The testing member may lift up the testing tool or component for releasing the locking member and the testing tool or component is locked again when put back to the tool magazine by the testing member.

In some other embodiment, the locking member may be a mechanism which can be turned on and off. The mechanism may comprise a lock actuator 206 and a locking element 204 as illustrated in Figure 2B. The lock actuator 206 may be positioned to the tool magazine 108, 118 and may be configured to move the locking element in Y direction. The lock actuator 206 may be configured to set the locking element 204 to an open position and to a locked position by moving the locking element in Y direction. The actuator may be, for example, a pneumatic cylinder or any other component which can provide same movement for the locking element. In the locked position the locking element prevents the movement of the testing tools or components to the any directions in relation to the tool magazine. When the lock actuator sets the locking element to the open position, the testing tools or components may be removed or returned from/to the tool magazine. Hence, when the testing member is fetching or returning the testing tool or component, the locking element may be set to the open position and the testing member is able to fetch or return the testing tools or components. When the testing member is not changing the testing tool or component, in other words fetching or returning the testing tool or component, the locking element may be in the locked position and then it prevents the movement of the testing tool or component in relation to the tool magazine. In some embodiment, the described mechanical feature and mechanism both may be applied in the apparatus. For example, the first tool magazine may comprise the locking member which is the mechanical feature and the second tool magazine may comprise the mechanism or vice versa. In some embodiment, the testing tools may be locked by the mechanical feature and the testing components may be locked by the mechanism.

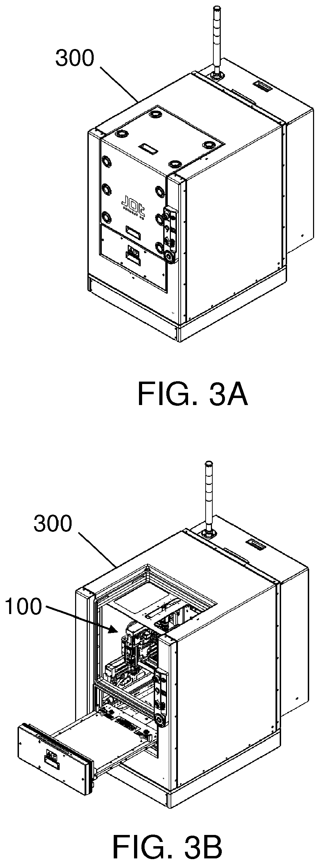

Figure 3A and 3B illustrate a testing chamber 300, comprising the apparatus 100 according to any preceding claim. The apparatus 100 is positioned substantially inside the testing chamber 300. The apparatus 100 may perform the testing of the electronic device inside the chamber 300. The testing chamber may be positioned, for example, on a production line of the electronic device. The tool magazine arrangement according to the invention enables smaller outer dimensions of the chamber which is great benefit in the production line of the electronic device. The less space is needed for the production line the more cost effective is the production of the electronic device.

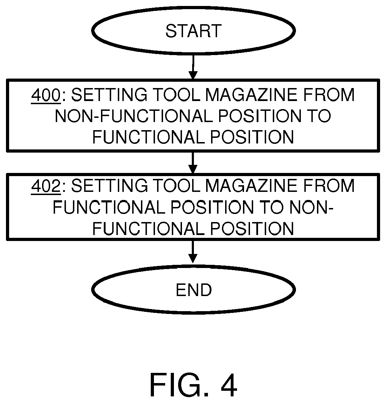

Figure 4 illustrates a flow diagram according to an embodiment. Referring to Figure 4, in step 400 setting, by an actuator 112, a tool magazine 108 from a non-functional position P1 to a functional position P2, and in step 402 setting, by the actuator 112, the tool magazine 108 from the functional position P2 to the non-functional position P1.

The apparatus according to the invention provides the sophisticated and effective solution for placing the tool magazine(s) and the tools in the testing unit, especially when the testing unit is the testing chamber. Space inside the testing chamber is very limited, hence it is very important that a lot of inner space of the chamber is not needed for storing the tools needed for the testing of the electronic device. The apparatus according to the invention make possible to optimize the usage of the inner space for testing and reduces the space needed for the testing equipment.

The apparatus may further comprise a controller comprising at least one processor and at least one memory. Their operation is based on a sequence of program commands of the computer program controlling the operation of the conveyer arrangement and/or the testing system. The computer program may be stored in the at least one memory. The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

The apparatus may further comprise sensor(s) for detecting different states or movements of the parts used in the apparatus. The sensors may be placed in the different places in the apparatus. The sensors may comprise, for example, electrical sensors, magnetic sensors, pressure sensors or optical sensors.

It will be obvious to a person skilled in the art that, as technology advances, the inventive concept can be implemented in various ways. The invention and its embodiments are not limited to the example embodiments described above but may vary within the scope of the claims.

## Claims

1. An apparatus (100) for testing an electronic device (102), comprising:
a testing member (104) configured to perform testing of the electronic device (102);
a guiding member (106) configured to guide a movement of the testing member (104) and determine a working area of the testing member (A1);
a tool magazine (108) configured to store replaceable testing tools of the testing member (110) used for testing the electronic device (102); and
an actuator (112) configured to set the tool magazine (108) to a non-functional position (P1) and to a functional position (P2), wherein the tool magazine (108) within the non-functional position (P1) is configured to be out of the working area of the testing member (A1) and at least partly to overlap with the guiding member (106) in a direction (Z) which is a parallel to a normal of a plane of the working area of the testing member (A1).

2. The apparatus (100) according to claim 1, wherein a structure of the tool magazine (108) is elongated.

3. The apparatus (100) according to any preceding claim, wherein the tool magazine (108) is configured to overlap with the guiding member (106) in the non-functional position (P1) such that the tool magazine (108) is either side of the guiding member (106).

4. The apparatus (100) according to any preceding claim, wherein a longitudinal axis of the tool magazine (108) and the guiding member (106), which is parallel to a normal of the direction Z, are parallel when the tool magazine (108) is within the non-functional position (P1).

5. The apparatus (100) according to any preceding claim, wherein the tool magazine (108) in the functional position (P2) is configured to be positioned within the working area of the testing member (A1).

6. The apparatus (100) according to any preceding claim, wherein the tool magazine (108) is configured to provide the replaceable testing tools (110) for the testing member (104) when the tool magazine (108) is within the functional position (P2).

7. The apparatus (100) according to any preceding claim, wherein the tool magazine (108) is configured to receive the replaceable testing tools (110) from the testing member (104) when the tool magazine (108) is within the functional position (P2).

8. The apparatus (100) according to any preceding claim, wherein the tool magazine (108) is configured to store the replaceable testing tools (110) side by side along a longitudinal direction of the tool magazine (108).

9. The apparatus (100) according to any preceding claim, wherein the actuator (112) is positioned substantially in the middle of the tool magazine (108) in the longitudinal direction of the tool magazine (108).

10. The apparatus (100) according to any preceding claim, wherein the apparatus (100) further comprises:
a first guiding member (106), a second guiding member (114) and a third guiding member (116) configured to guide the movement of the testing member (104) and determine the working area of the testing member (A1);
a first tool magazine (108) and a second tool magazine (118) configured to store the replaceable testing tools of the testing member (110) used for testing the electronic device (102); and
a first actuator (112) and a second actuator (120), wherein the first actuator (112) is configured to set the first tool magazine (108) to the non-functional position (P1) and to the functional position (P2) and the second actuator (120) is configured to set the second tool magazine (118) to the non-functional position (P1) and to the functional position (P2),
wherein the first and the second tool magazine (108, 118) within the non-functional position (P1) are configured to be out of the working area of the testing member (A1), and wherein the first tool magazine (108) is configured at least partly to overlap with the first guiding member (106) and the second tool magazine (118) is configured at least partly to overlap with the third guiding member (116) in a direction (Z) which is parallel to the normal of the plane of the working area of the testing member (A1).

11. The apparatus (100) according to any preceding claim, wherein the first tool magazine (108) is configured to overlap with the first guiding member (106) such that the first tool magazine (108) is on a first side of the first guiding member (106), and wherein the second tool magazine (118) is configured to overlap with the first guiding member (106) such that the second tool magazine (118) is on a second side of the first guiding member (106) in the non-functional position (P1), wherein the first and the second sides of the guiding member (106) are opposite to each other.

12. The apparatus (100) according to any preceding claim, wherein the second tool magazine (118) is configured to store replaceable components of the replaceable testing tools (122) used for testing the electronic device (102).

13. The apparatus (100) according to any preceding claim, wherein the tool magazine (108, 118) comprises a locking member configured to prevent a movement of the replaceable testing tools (110) or the replaceable components of the replaceable testing tools (122) in relation to the tool magazine (108, 118) when setting the tool magazine to the non-functional position (P1) and/or functional position (P2).

14. A testing chamber (200), comprising the apparatus (100) according to any preceding claim.

15. A method for testing an electronic device (102), the method comprising:
setting (400), by an actuator (112), a tool magazine (108) from a non-functional position (P1) to a functional position (P2); and
setting (402), by the actuator (112), the tool magazine (108) from the functional position (P2) to the non-functional position (P1).
